(19) Europäisches Patentamt
European Patent Office
Office européen des brevets

(11) **EP 4 742 120 A1**

(12) **EUROPÄISCHE PATENTANMELDUNG**

(43) Veröffentlichungstag:
**13.05.2026 Patentblatt 2026/20**

(21) Anmeldenummer: **25213684.1**

(22) Anmeldetag: **05.11.2025**

(51) Internationale Patentklassifikation (IPC):
*G06Q 10/04* (2023.01)    *B07C 5/00* (2006.01)
*B65G 61/00* (2006.01)    *G06Q 10/0633* (2023.01)
*G06Q 10/083* (2024.01)    *G06Q 10/087* (2023.01)

(52) Gemeinsame Patentklassifikation (CPC):
**G06Q 10/04; B07C 5/00; B65G 61/00;
G06Q 10/0633; G06Q 10/0843; G06Q 10/08741**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **07.11.2024 DE 102024132422**

(71) Anmelder: **Deutsche Post AG
53113 Bonn (DE)**

(72) Erfinder:
• **LANGER, Frank
53844 Troisdorf (DE)**
• **PATHAN, Saira
50996 Köln (DE)**

(74) Vertreter: **Cohausz & Florack
Patent- & Rechtsanwälte
Partnerschaftsgesellschaft mbB
Bleichstraße 14
40211 Düsseldorf (DE)**

(54) **VERFAHREN ZUM BELADEN VON TRANSPORTEINHEIT MIT PACKSTÜCKEN**

(57) Beschrieben und dargestellt ist ein Verfahren zum Beladen wenigstens einer Transporteinheit (13) mit Packstücken (2). Um die Beschädigung von Packstücken infolge des Verladens der Packstücke in eine Transporteinheit zu vermieden, ist vorgesehen, dass die Packstücke (2) nacheinander mit einem optischen Scanner (7) gescannt werden, dass von einer Auswerteeinheit (11) anhand der Aufnahmen des optischen Scanners (7) von jedem Packstück (2) wenigstens ein Stabilitätsparameter ermittelt wird, dass die Auswerteeinheit (11) jedem Packstück (2) basierend auf dem wenigstens einen Stabilitätsparameter einen Stabilitätsscore zuordnet und dass die Packstücke (2) in Abhängigkeit der jeweiligen Stabilitätsscores an unterschiedliche Stellen in der wenigstens einen Transporteinheit (13) verladen werden.

Fig.2

**Beschreibung**

Die Erfindung betrifft ein Verfahren zum Beladen wenigstens einer Transporteinheit mit Packstücken.

Verfahren zum Beladen von Transporteinheiten mit Packstücken sind aus unterschiedlichen Anwendungen bekannt, wobei die Transporteinheiten händisch oder unter Verwendung eines Roboters beladen werden können. Wenn die Packstücke zufällige Größen und Gewichte aufweisen und in einer zufälligen Reihenfolge in die Transporteinheiten verladen werden, wird der von den Transporteinheiten bereitgestellte Laderaum nicht immer voll ausgenutzt. Zudem kann es zu Beschädigungen von Packstücken durch die anderen, nachfolgend in dieselben Transporteinheiten geladenen Packstücke kommen.

Dies ist insbesondere im Zusammenhang mit Verfahren zum Umverteilen von Packstücken in Sortierstationen, die in unterschiedlichen Ausgestaltungen bekannt sind, und bei denen die Packstücke nach einem Sortieren der Packstücke in der Sortierstation in viele meist gleichartige Transporteinheiten geladen werden, problematisch. Die Packstücke können zunächst beispielsweise in Aufbauten von Lastkraftwagen oder Anhängern angeliefert, entladen und dabei in eine Transportreihenfolge vereinzelt werden. Die Packstücke werden dann in der Transportreihenfolge gescannt, wobei ein Sortierparameter erfasst wird, nach dem die Packstücke sortiert werden. Je nach dem Sortierparameter werden die Packstücke dann auf unterschiedliche Transporteinheiten verteilt, mit denen die Packstücke dann aus der Sortierstation abtransportiert werden. In vielen Fällen handelt es sich bei diesen Transporteinheiten, anders als bei den Transporteinheiten, die in der Sortierstation entladen werden, um Rollbehälter, Gitterboxen, Paletten, Paletten mit Wänden oder Unit Load Devices (ULD). Unit Load Devices sind Paletten und Container, die zum Beladen von Flugzeugen verwendet werden und daher an die Abmessungen von Flugzeugrümpfen angepasst sind. Als Transporteinheiten kommen aber auch sogenannte Wechselbrücken, also LKW-Aufbauten mit Stützen zum Abstellen ohne Fahrgestell und zum Unterfahren mit einem Fahrgestell zum Zwecke des Aufladens in Frage, und zwar als zu beladende Transporteinheiten wie auch als in der Sortierstation zu entladende Transporteinheiten.

Die Packstücke können nach dem Scannen in einem Zwischenspeicher, etwa einem Regallager oder dergleichen, bis zum Weitertransport der Packstücke zwischengespeichert werden. Aus dem Zwischenspeicher können die Packstücke dann in einer bestimmten oder beliebigen Reihenfolge entnommen werden. Um eine hohe Effizienz und eine geringe Verweilzeit der Packstücke in der Sortierstation zu erreichen, wird aber oft auf das Zwischenspeichern der Packstücke verzichtet. Die Packstücke werden mit Förderbändern oder dergleichen vom Ort des Entladens aus Transporteinheiten zum Ort des Verladens in andere Transporteinheiten gefördert und dabei sortiert. Denkbar ist beispielsweise, dass die Packstücke teilweise von einem Laufband auf ein anderes Laufband oder in eine Rutsche verschoben werden, um die Packstücke zu sortieren. Es gibt dann bedarfsweise eine Transportreihenfolge, in der die Packstücke transportiert, gescannt und einer Sortiereinrichtung zugeführt werden. Nach dem Sortieren werden die Packstücke typischerweise in unterschiedliche Transporteinheiten geladen, was bedarfsweis von einem Roboter übernommen wird.

Um den in den Transporteinheiten zur Verfügung stehenden Platz effizient nutzen zu können, werden in einigen Fällen auch Größenmaße der Packstücke erfasst. Ein Beladungsalgorithmus kann dann vorgeben, wo bestimmte Packstücke in die Transporteinheiten gestapelt werden sollten, um wenig Platz zu verschenken. Unterstützend können die aktuellen Beladezustände der Transporteinheiten mit Sensoren überwacht werden. Werden die Packstücke in der Sortierstation zwischengespeichert, können die Packstücke in einer Reihenfolge aus dem Zwischenspeicher entnommen werden, in der die Packstücke platzsparend gestapelt werden können.

Unabhängig davon, wie das Sortieren der Packstücke erfolgt und wie platzsparend oder zufällig die Transporteinheiten mit Packstücken beladen werden, kann nicht ausgeschlossen werden, dass einzelne Packstücke durch andere Packstücke in der Transporteinheit beschädigt werden. Dabei kann sich die Beschädigung nur auf die Verpackung beziehen. Dies kann in der Folge aber dennoch zu einer Beschädigung des verpackten Guts oder zu Problemen bei einer späteren Handhabung des beschädigten Packstücks führen.

Daher liegt der vorliegenden Erfindung die Aufgabe zugrunde, das Verfahren der eingangs genannten und zuvor näher erläuterten Art derart auszugestalten und weiterzubilden, dass die Beschädigung von Packstücken infolge des Verladens der Packstücke in eine Transporteinheit vermieden wird.

Diese Aufgabe ist gemäß Anspruch 1 gelöst durch ein Verfahren zum Beladen wenigstens einer Transporteinheit mit Packstücken,

- bei dem die Packstücke nacheinander mit einem optischen Scanner gescannt werden,
- bei dem von einer Auswerteeinheit anhand der Aufnahmen des optischen Scanners von jedem Packstück wenigstens ein Stabilitätsparameter ermittelt wird,
- bei dem die Auswerteeinheit jedem Packstück basierend auf dem wenigstens einen Stabilitätsparameter einen Stabilitätsscore zuordnet und
- bei dem die Packstücke in Abhängigkeit des jeweiligen Stabilitätsscores an unterschiedliche Stellen in der wenigstens einen Transporteinheit verladen werden.

Beim Beladen wenigstens einer Transporteinheit werden die Packstücke vor dem Beladen der Transporteinheit mit den Packstücken mit Hilfe eines optischen Scanners gescannt. Der optische Spanner produziert mithin Bildmaterial oder dergleichen, das mit einer Auswerteeinheit verhältnismäßig einfach und schnell ausgewertet werden kann. Dabei ist die Auswerteeinheit dazu ausgebildet, anhand der wenigstens einen Aufnahme des jeweiligen Packstücks wenigstens einen Stabilitätsparameter des Packstücks zu ermittelt. Der Stabilitätsparameter bestimmt dabei mit, wie stabil das jeweilige Packstück ist, was sich grob oder annäherungsweise durch einen Stabilitätsscore ausdrücken lässt, der von der Auswerteeinheit anhand des Stabilitätsparameters abgeleitet und dem jeweiligen Packstück zugeordnet wird. Wenn von der Auswerteeinheit nur jeweils ein Stabilitätsparameter ermittelt wird, kann der Stabilitätsparameter dem Stabilitätsscore entsprechen. Der Stabilitätsscore kann aber auch noch von wenigstens einem weiteren Faktor als dem einzigen Stabilitätsparameter abhängig sein. Dies kann wenigstens ein weiterer Stabilitätsparameter und/oder wenigstens ein anderer Parameter sein, der nichts mit einem Stabilitätsparameter zu tun haben muss. Verfahrensmäßig wird der Stabilitätsscore der Packstücke vorgeben, an welchen Stellen die Packstücke in die Transporteinheit verladen werden sollten, um ein Beschädigen der beladenen Packstücke zu vermeiden.

Dabei müssen die Packstücke aber nicht zwingend ausschließlich in Abhängigkeit der jeweiligen Stabilitätsscores an unterschiedliche Stellen in der wenigstens einen Transporteinheit verladen werden. Es können hierbei weitere Parameter berücksichtigt werden, die nichts oder weniger mit der Stabilität der Packstücke zu tun haben. Beispielsweise können zusätzlich zu den Stabilitätsscores auch die Abmessungen der Packstücke und/oder deren Gewicht berücksichtigt werden. Die Abmessungen können leicht gescannt werden. Das Gewicht kann, soweit auf dem Packstück vermerkt, vom Scanner ausgelesen oder mit einer Waage bestimmt werden. So kann das Gewicht beispielsweise mit dem Scanner anhand der Art des Packstücks, anhand eines Labels oder anhand einer Frankierung bestimmt werden. Auf die beschriebene Weise kann der Laderaum in Transporteinheiten besser genutzt werden und es kann weiter verhindert werden, dass besonders schwere Packstücke darunter angeordnete Packstücke beschädigen.

Um die Beschädigung eines einzelnen Packstücks recht sicher zu vermeiden, kann das Packstück ganz oben in die Transporteinheit verladen werden, so dass keine anderen Packstücke auf das entsprechende Packstück gestapelt werden. Dies schließt aber nicht aus, dass das ganz oben in die Transporteinheit verladene Packstücke ein darunterliegendes Packstück beschädigen oder zu dessen Beschädigung beitragen kann. Außerdem versteht sich, dass nicht alle Packstücke ganz oben in eine Transporteinheit verladen werden können, wenn der Laderaum effizient genutzt werden muss.

Es bietet sich also an, wenn die stabileren Packstücke weiter unten in die Transporteinheit verladen werden, als die leichter zu beschädigenden, mithin weniger tragfähigen Packstücke. Wenn die Packstücke an jeder Stelle der Transporteinheit ausreichend tragfähig sind, um die über den jeweiligen Packstücken verladenen anderen Packstücke zu tragen, werden einzelne, verladene Packstücke in einer Transporteinheit allenfalls mit einer sehr geringen Wahrscheinlichkeit beschädigt. Die Tragfähigkeit der Packstücke kann über den Stabilitätsscore derart abgebildet werden, dass ein höherer Stabilitätsscore eine höhere Stabilität, Tragfähigkeit und/oder Stapelbarkeit anzeigt und ein niedrigerer Stabilitätsscore eine geringere Stabilität, Tragfähigkeit und/oder Stapelbarkeit anzeigt. Dabei kann der Wertbereich des Stabilitätsscores bedarfsweise vorgegeben werden. Der Wertebereich des Stabilitätsscores kann beispielsweise zwischen 0 und 1 liegen. Ein Stabilitätsscore von 0 könnte dann eine minimale oder wenigstens im Wesentlichen gar keine Stabilität, Tragfähigkeit und/oder Stapelbarkeit anzeigen, während ein Stabilitätsscore von 1 eine maximale, also sehr hohe Stabilität, Tragfähigkeit und/oder Stapelbarkeit anzeigen könnte.

Zur möglichst zutreffenden Bestimmung des wenigstens einen Stabilitätsparameters eines Packstücks kann es sich grundsätzlich anbieten, mit dem optischen Scanner mehrere unterschiedliche Aufnahmen von dem Packstück anzufertigen. Dabei bietet es sich insbesondere an, wenn die Aufnahmen aus unterschiedlichen Blickwinkeln erfolgen und/oder wenn unterschiedliche Seiten, bedarfsweise alle Seiten des jeweiligen Packstücks gescannt werden. Unabhängig oder zusätzlich dazu kann es sich auch bieten, unterschiedliche Details der Packstücke zu scannen, die einen hohen Einfluss auf den wenigstens einen zu ermittelnden Stabilitätsparamater haben. Bei hinreichender Auflösung der Aufnahmen, kann aber auch ein besonderes Augenmerk auf bestimmte Details des Packstücks gelegt werden, ohne dieses Detail separat zu scannen. Es kann mithin ausreichen, wenn das entsprechende Detail in einer größeren Aufnahme mit hinreichender Genauigkeit erfasst wird.

Damit den Packstücken ein Stabilitätsscore zugeordnet werden kann, der die Tragfähigkeit und Stabilität der Packstücke möglichst zuverlässig charakterisiert und der zudem möglichst praxisrelevant für die Verladung der Packstücke in der Transporteinheit ist, wird es sich in vielen Fällen anbieten, wenn von der Auswerteeinheit anhand der vom optischen Scanner übermittelten Aufnahmen mehrere unterschiedliche Stabilitätsparameter ermittelt werden, die dann zusammen den den Packstücken zuzuordnenden Stabilitätsscore wenigstens mitbestimmen. So kann beispielsweise wenigstens ein Stabilitätsparameter abhängig sein von der Art und/oder der Größe des Packstücks, während wenigstens ein anderer Stabilitätsparameter von der Art des Verpackungsmaterials oder Beschädigungen an dem Verpackungsmaterial oder dem Packstück anhängig sein kann. Der Stabilitätsscore kann dann in einem Kennwert all diese, die Stabilität, Tragfähigkeit und/oder Stapelbarkeit beeinflussenden Parameter und Faktoren sowie deren Wechselwirkung berücksichtigen.

Zum Zwecke einer möglichst guten Vergleichbarkeit unterschiedlicher Packstücke, insbesondere der in einer gemeinsamen Transporteinheit zu verladenden Packstücke, kann es sich grundsätzlich anbieten, wenn von den jeweiligen Packstücken jeweils der gleiche wenigstens eine Stabilitätsparameter ermittelt wird. Im Falle von mehreren unterschiedlichen Stabilitätsparametern können diese Stabilitätsparameter zweckmäßig für jedes der zu untersuchenden Packstücke ermittelt werden.

Unter Packstücken können grundsätzlich Stückgüter unterschiedlicher Art verstanden werden. Es können aber auch Stückgüter einer besonderen Art gemeint sein, etwa mit Verpackungen verpackte Waren. Packstücke können mithin wenigstens eine Umverpackung aus Papier, Pappe, Gewebe oder Kunststoff aufweisen und beispielsweise als Pakete, Kisten und Behälter sowie als nicht formstabile Gebinde wie Tüten, Beutel oder Säcke vorliegen. Die in Packstücken verpackten Waren können selbst einzelne Stückgüter, Schüttgüter, Flüssigkeiten oder pastöse Materialien sein.

Bei einer ersten besonders bevorzugten Ausgestaltung des Verfahrens werden die Packstücke in Abhängigkeit der jeweiligen Stabilitätsscores auf unterschiedlichen Höhenniveaus in der wenigstens einen Transporteinheit verladen. Es ist mithin nicht zwingend erforderlich, eine klare Reihenfolge der Packstücke nach ihren Stabilitätsscores aufzustellen, nach der das Beladen einer Transporteinheit zwingend und exakt vordefiniert erfolgt, auch wenn dies natürlich möglich ist. Grundsätzlich reicht es aus, die möglichen Stabilitätsscores zu klassifizieren und den entsprechenden Klassen von Stabilitätsscores Höhenniveaus in der wenigstens einen Transporteinheit zuzuordnen. Es kann sich beispielsweise in vielen Fällen anbieten, wenn die Stabilitätsscores in drei unterschiedlichen Klassen klassifiziert werden, wobei die Packstücke mit Stabilitätsscores in der höchsten Klasse auf einem untersten Höhenniveau in die Transporteinheit verladen werden. Die Packstücke mit Stabilitätsscores entsprechend der mittleren Klasse, werden dann auf einem mittleren Höhenniveau in die Transporteinheit verladen. Schließlich werden die Packstücke, deren Stabilitätsscores zur niedrigsten Kategorie zählen, auf dem obersten Höhenniveau verladen. Die Anzahl der unterschiedlichen Höhenniveaus und die Anzahl der unterschiedlichen Klassen der Stabilitätsscores entsprechen daher der Einfachheit halber einander. Das zuvor beschriebene Beispiel bietet zudem den Vorteil, dass die Reihenfolge der verladenden Packstücke nicht ausschließlich durch den Stabilitätsscore der Packstücke vorgegeben ist. Es können bei der Festlegung der Reihenfolge der Verladung der Packstücke vielmehr zudem auch weitere Parameter, wie die Größe der jeweiligen Packstücke, das Gewicht der jeweiligen Packstücke und der Beladezustand der entsprechenden Transporteinheit berücksichtigt werden. So kann beispielsweise eine hohe Packdichte mit wenigen Freiräumen in der Transporteinheit erzielt werden. Zudem kann eine übermäßige Belastung von Packstücken durch besonders schwere andere Packstücke vermieden werden.

In dem vorbeschriebenen Beispiel, können beispielsweise Stabilitätsscores zwischen 0 und 0,33 einer unteren Klasse von Stabilitätsscores zugeordnet werden, während Stabilitätsscores zwischen 0,34 und 0,66 einer mittleren Klasse von Stabilitätsscores und Stabilitätsscores zwischen 0,67 und 1 einer oberen Klasse von Stabilitätsscores entsprechen. Alle Packstücke mit einem Stabilitätsscore zwischen 0,67 und 1 werden mithin zuerst und auf dem unteren Höhenniveau in die Transporteinheit verladen. Die Packstücke mit einem Stabilitätsscore zwischen 0,34 und 0,66 werden anschließend auf dem mittleren Höhenniveau der Transporteinheit in die Transporteinheit verladen. Schließlich werden die Packstücke mit Stabilitätsscores zwischen 0 und 0,33 auf dem oberen Höhenniveau der Transporteinheit in die Transporteinheit verladen. Es versteht sich, dass die Zuordnung von Höhenniveaus und Stabilitätsscores in Abhängigkeit der jeweiligen Transporteinheiten so aufeinander abgestimmt werden, dass die Packstücke mit entsprechenden Stabilitätsscores auf den zugeordneten Höhenniveaus verladen werden können, ohne dass diese dann von später verladenen Packstücken beschädigt werden.

Dabei bleibt jedoch unberücksichtigt, wie viele Packstücke in welcher Größe und/oder mit welchem Gewicht Stabilitätsscores in welcher Kategorie aufweisen. Denkbar ist beispielsweise, dass es keine oder kaum Packstücke mit Stabilitätsscores zwischen 0,67 und 1 gibt. Denkbar ist auch, dass zu viele besonders schwere Packstücke, insbesondere mit einem geringen Stabilitätsscore vorhanden sind, als dass diese zweckmäßig verladen werden können, ohne selbst beschädigt zu werden oder andere Packstücke zu beschädigen. Die Wertegrenzen für die Zuordnung des Stabilitätsscores in die unterschiedlichen Kategorien kann gegebenenfalls anzupassen sein, ohne dass Packstücke durch weiter oben in die Transporteinheit gestapelte Packstücke beschädigt werden.

Daher kann auch vorgesehen sein, dass Packstücke mit einem Stabilitätsscore einer bestimmten Kategorie jeweils auf dem dieser Kategorie zugeordneten Höhenniveau oder einem darüber liegenden Höhenniveau in die Transporteinheit verladen werden. Wenn etwa ein Packstück eine Stabilität, Tragfähigkeit und/oder Stapelbarkeit aufweist, die für das Verladen auf einem mittleren Höhenniveau ausreicht, so reicht diese umso mehr aus, um auf einem darüberliegenden Höhenniveau verladen zu werden. So wird die Wahrscheinlichkeit gesteigert, dass Packstücke zur Verladung auf einem Höhenniveau anstehen, auf dem diese aufgrund des Stabilitätsscores auch beschädigungsfrei verladen werden können. Dies kann jedoch wiederum durch die Größe und/oder das Gewicht der Packstücke eingeschränkt werden.

Die genannten erfindungsgemäßen Vorteile kommen insbesondere zum Tragen, wenn die wenigstens eine Transporteinheit ein Rollbehälter, eine Gitterbox, eine Palette, eine Palette mit Wänden, eine sogenannte Wechselbrücke, ein LKW oder ein Unit Load Device (ULD) ist. Entsprechende Transporteinheiten werden sehr häufig zum Umverteilen von Packstücken genutzt. Zudem werden solche Transporteinheiten sehr häufig für Packstücke genutzt, die aufgrund ihrer geringen Stabilität, Tragfähigkeit und/oder Stapelbarkeit bei unsachgemäßer Verladung mitunter leicht beschädigt werden können.

Alternativ oder zusätzlich bietet es sich an, wenn die Packstücke von einem Sechsseiten-Scanner und/oder einem Linienscanner, insbesondere einem RGB-Linienscanner, und/oder einem Volumenscanner gescannt werden. Ein Sechsseiten-Scanner kann bevorzugt von allen sechs Seiten des Packstücks jeweils ein Bild aufnehmen, wobei sich dann die Pixel der Bilder auswerten lassen. Insbesondere können anhand von Grauwerten in bestimmten Bereichen des Packstücks Rückschlüsse auf die Größenordnung entsprechender Stabilitätsparameter gezogen werden. Beispielsweise können die zu einem Packstück gehörigen Pixel gezählt und daraus die Größenabmessungen des Packstücks ermittelt werden, insbesondere wenn zuvor eine Kalibrierung in Bezug auf das Verhältnis von Pixelzahlen und Größenabmessungen erfolgt ist.

In einem einfacheren Fall kann auch ein Linienscanner verwendet werden, an dem die Packstücke vorbei transportiert werden. Der Linienscanner scannt dabei eine Seite des Packstücks, etwa von oben, und nimmt dabei zeilenweise Bilder auf. Die Pixel jeder Zeile können dann gegen die Zeit bzw. die Anzahl der Zeilen hintereinander aufgetragen werden, wodurch man Bilder aus einer Vielzahl von einzelnen Zeilen und damit letztlich Pixelflächen erhält, die mit den gescannten Flächen der Packstücke korrelieren.

Besonders bevorzugt sind in diesem Zusammenhang RGB-Scanner, wobei als RGB ein Farbraum bezeichnet wird, der mittels der Farben rot, grün und blau, also den Primärfarben des Lichts, gebildet wird. Vereinfacht gesprochen erfasst der Linienscanner die Farben rot, grün und blau. Im Gegensatz zu den Linienscannern erlauben Sechsseiten-Scanner die Ermittlung einer dreidimensionalen Form des Packstücks.

Bedarfsweise können alternativ oder zusätzlich auch sogenannte Volumenscanner verwendet werden, die meist Laser einsetzen. Die Volumenscanner können zudem als Linienscanner ausgebildet sein, an dem die Packstücke dann vorbeitransportiert werden. Der Vorteil dieser Scanner besteht darin, dass aus einer mittels eines entsprechenden Detektors aufgefangenen Punktewolle des Lasers auf die dreidimensionale Form der Packstücke geschlossen werden kann. Typischerweise wird die auf einem Förderband aufliegende Seite eines Packstücks nicht gescannt, was aber regelmäßig in Kauf genommen werden kann. Meist werden die Packstücke von einer Seite, insbesondere wenigstens im Wesentlichen von oben, mit dem Laser beaufschlagt.

Damit die Auswerteeinheit für jedes Packstück den wenigstens einen Stabilitätsparameter sehr zuverlässig und exakt ermitteln kann, kann es sich anbieten, wenn anstelle eines einzigen Scanners mehrere, unterschiedliche Prinzipien anwendende Scanner verwendet werden. So kann der Auswerteeinheit eine besonders zweckmäßige und umfassende Datenbasis zum Ermitteln der Stabilitätsparameter zu Verfügung gestellt werden.

Für ein Effizientes und fehlerfreies Verladen der Packstücke in die wenigstens eine Transporteinheit kann es vorgesehen sein, dass die Packstücke von wenigstens einem Roboter in wenigstens teilweiser Abhängigkeit der jeweiligen Stabilitätsscores an unterschiedliche Stellen in der wenigstens einen Transporteinheit verladen werden. Wird anstelle des wenigstens einen Roboters aber eine Person zum Verladen vorgesehen, lässt sich nicht ausschließen, dass diese hin und wieder versehentlich Packstücke auf unzutreffenden Höhenniveaus in die Transporteinheit einlegt. Allerdings haben Personen oftmals ein gutes intuitives Gespür dafür, wo auf einem Höhenniveau welche Packstücke zweckmäßig gestapelt werden sollten, um Beschädigungen an den Packstücken zu vermeiden und gegebenenfalls, um auch den Laderaum effizient auszunutzen, auch wenn die Packstücke Stabilitätsscores derselben Kategorie aufweisen oder wenn die Packstücke wenigstens im Wesentlichen die gleichen Stabilitätsscores aufweisen.

Damit das Verladen von Packstücken in die wenigstens eine Transporteinheit schnell und zuverlässig erfolgen kann, bietet es sich an, wenn dem Roboter und/oder der Person eine Information betreffend den Stabilitätsscore des jeweiligen Packstücks angezeigt und/oder mitgeteilt wird. Im Falle eines Roboters kann die entsprechende Information mittels einer geeigneten Schnittstelle an den Roboter übergeben werden. Die Information kann, insbesondere der Person, auch an dem Packstück selbst vermerkt werden, etwa mittels einem farbigen Klebezettel oder einer farblichen Markierung auf dem Packstück, wobei bestimmte Farben dann bestimmte Stabilitätsscores oder Stabilitätsscorebereiche repräsentieren. Der Roboter kann dann bedarfsweise mittels einer entsprechenden Sensorik die Anzeige erfassen und auswerten.

Im Falle einer Person kann die entsprechende Information beispielsweise akustisch, etwa über einen Kopfhörer, mitgeteilt werden. Die Information kann alternativ oder zusätzlich aber auch angezeigt werden, wobei die Information beispielsweise auf dem Packstück vermerkt ist, beispielsweise durch einen, insbesondere farbigen, Klebesticker oder einen anderen Farbcode, oder über ein Display so angezeigt wird, dass die Person die angezeigte Information leicht, schnell und zuverlässig dem jeweils zugehörigen Packstück zuordnen kann. Bedarfsweise kann zusätzlich oder alternativ zu der Information betreffend den Stabilitätsscore des jeweiligen Packstücks auch eine Information betreffend den anhand des Stabilitätsscores bestimmten Ort der Verladung angezeigt und/oder mitgeteilt werden. Die Art und Weise der Anzeige und des Mitteilens kann dabei bedarfsweise wie zuvor für die Information betreffend den Stabilitätsscore erfolgen.

Zur Steigerung der Effektivität des vorliegenden Verfahrens kann es beitragen, wenn die Packstücke nacheinander in einer Transportreihenfolge mit dem optischen Scanner gescannt werden. Dabei lassen sich die Packstücke in der Transportreihenfolge nacheinander an dem optischen Scanner vorbeiführen. In Abhängigkeit der den Packstücken zugeordneten Stabilitätsscores können die Packstücke dann anschließend in eine von der Transportreihenfolge abweichende Beladereihenfolge gebracht werden, in welcher die Packstücke nacheinander in die Transporteinheit verladen werden. Dieses Vorgehen lässt sich in hohem Maße automatisieren und damit beschleunigen. Dabei bietet es sich für ein reibungsloses Verladen der Packstücke weiter an, wenn die Packstücke in der Beladereihenfolge zu dem die Packstücke in die Transporteinheit verladenden Roboter und/oder zu der die Packstücke in die Transporteinheit verladenden Person transportiert werden.

Die Packstücke werden bedarfsweise von einer Sortiereinrichtung automatisiert in Abhängigkeit der den Packstücken zugeordneten Stabilitätsscores in eine von der Transportreihenfolge abweichende Beladereihenfolge gebracht. Der entsprechende Automatisierungsgrad steigert generell die Effizienz des Verfahrens insgesamt. Dabei können zudem Packstücke anhand des zugeordneten Stabilitätsscores als nichtstapelbar aus der Transportreihenfolge und/oder der Beladungsreihenfolge ausgeschleust werden. Diese nicht stapelbaren Packstücke können dann separat gehandhabt, insbesondere händisch und/oder in spezielle Transporteinheiten verladen werden. Infolge des Ausschleusens der nicht stapelbaren Packstücke behindern diese nicht das Beladen der wenigstens einen Transporteinheit mit den anderen, stapelbaren Packstücken. Eine weitere Steigerung der Effizienz kann bedarfsweise erreicht werden, wenn die Packstücke von einer Transporteinrichtung automatisiert in der Beladereihenfolge zum dem die Packstücke in die Transporteinheit verladenden Roboter und/oder zum der die Packstücke in die Transporteinheit verladenden Person transportiert werden. Die Packstücke brauchen dann nur noch der entsprechenden Beladereihenfolge nach ergriffen und in die Transporteinheit gestapelt werden.

Bevorzugt kann von der Auswerteeinheit wenigstens ein Stabilitätsparameter der Packstücke in Form eines Größenparameters, insbesondere in Form einer Höhe, einer Breite und/oder einer Länge ermittelt werden. Dies ist unter Auswertung der optischen Scans in bekannter Weise möglich. Zudem beeinflussen entsprechende Größenparameter die Stabilität, Tragfähigkeit und/oder Stapelbarkeit der Packstücke. Typischerweise sind kleinere Packstücke stabiler und tragfähiger und sind daher besser stapelbar. Packstücke ähnlichen Volumens sind grundsätzlich stabiler und tragfähiger, wenn sie etwa die Form eines Würfels aufweisen. Lange und flache Packstücke sind dagegen aus Stapelbarkeitsgesichtspunkten weniger bevorzugt.

Die Auswerteeinheit kann zusätzlich oder alternativ zu den Abmessungen wenigstens ein Stabilitätsparameter der Packstücke betreffend die Form und/oder die Oberfläche ermitteln. Auch auf diese Weise lassen sich Rückschlüsse auf die Stabilität, Tragfähigkeit und/oder Stapelbarkeit der Packstücke ziehen.

Wenigstens ein Stabilitätsparameter kann alternativ oder zusätzlich einer von der Auswerteeinheit ermittelten Packstückart und/oder einem von der Auswerteeinheit ermittelten Verpackungsmaterial des Packstücks und/oder einer von der Auswerteeinheit ermittelten Mehrlagigkeit des ermittelten Verpackungsmaterials und/oder einer von der Auswerteeinheit ermittelten Beschichtung des Verpackungsmaterials und/oder einer von der Auswerteeinheit ermittelten Feuchtigkeit des Verpackungsmaterials und/oder wenigstens einem von der Auswerteeinheit ermittelten Fleck des Verpackungsmaterials zugeordnet sein. Die Packstückart und/oder das Verpackungsmaterial lässt sich dabei beispielsweise aus der Form des Packstücks und dessen Oberfläche bestimmen. Eine Mehrlagigkeit etwa eines Kartons kann beispielsweise ebenfalls anhand der Form des Packstücks oder eines Aufdrucks abgeleitet werden. Bei Packstücken umfassend einen Karton ist der Karton meist einlagig, zweilagig oder dreilagig. Je mehr Lagen vorhanden sind, desto stabiler ist grundsätzlich das Packstück. Eine etwaig vorgesehene Beschichtung kann auch einen positiven Einfluss auf die Stabilität des Packstücks haben. Dagegen führt Feuchtigkeit im Verpackungsmaterial typischerweise zu einer reduzierten Stabilität des Packstücks. Dies gilt selbst dann, wenn das Verpackungsmaterial wieder getrocknet ist. Von der Auswerteeinheit kann gegebenenfalls ein Fleck dort ermittelt werden, wo das Verpackungsmaterial feucht ist oder feucht war. Flecken können aber auch Indizien für andere, die Stabilität des Packstücks herabsetzende Beeinträchtigungen des Verpackungsmaterials darstellen.

Der wenigstens eine Stabilitätsparameter kann auch mit der Erfassung eines Logos, einem Aufkleber, einer Absender-Adresse und/oder einem Retourenlabel verbunden sein. Logos können auf die Absender oder die Art des Packstücks Aufschluss geben. Wird ein Logo eines bestimmten Onlineversenders erkannt, der für eine bestimmte Qualität der Verpackung bekannt ist, kann dem Logo ein Stabilitätsparameter zugeordnet werden. Auch Aufkleber und oder eine Absender-Adresse kann Aufschluss auf den Versender und die Art des Packstücks geben, die aus Erfahrung mit einer bestimmten Art oder Qualität des Packstücks verknüpft ist. Dem Aufkleber und/oder der Absender-Adresse kann dann ein Stabilitätsparameter zugeordnet werden. Retourenlabel weisen typischerweise auf ein von einer Privatperson erstelltes Packstück hin. Aus Erfahrung kann beispielsweise geschlossen werden, dass die Retouren in den gleichen Verpackungen versendet werden, die nach dem erfolgten Öffnen und Wiederverschließen meist eine reduziertere Stabilität aufweisen. Retourenlabel stellen daher eher ein Indiz für einen schlechteren Stabilitätsscore dar.

Alternativ oder zusätzlich kann der wenigstens eine Stabilitätsparameter der Art von auf dem Packstück angebrachten Klebebändern und/oder der Anordnung von auf dem Packstück angebrachten Klebebändern und/oder der Größe des Öffnungsbereichs des Packstücks und/oder der Anordnung des Öffnungsbereichs des Packstücks am Packstück und/oder dem Öffnungsgrad des Öffnungsbereichs des Packstücks zugeordnet sein. Anhand der Klebebänder lässt sich ableiten, ob diese professionell und/oder maschinell aufgebraucht worden sind oder ob die Klebebänder von einer Privatperson angebracht wurden. Letzteres ist regelmäßig ein Indiz für einen verminderten Stabilitätsscore. Da Öffnungsbereiche von Verpackungen die Verpackungen meist schwächen, kann die Größe des jeweiligen Öffnungsbereichs des Packstücks als Stabilitätsparameter verwendet werden. Je kleiner der Öffnungsbereich, desto besser ist dies im Sinne einer erhöhten Stabilität der Packstücke. Dies gilt umso mehr, wenn der Öffnungsgrad des Öffnungsbereichs gering ist. In diesem Fall ist der Öffnungsbereich in hohem Maße mit einem Klebeband oder anderweitig geschlossen und steht mithin allenfalls geringfügig offen.

Der wenigstens eine Stabilitätsparameter kann alternativ oder zusätzlich auch wenigstens einem Beschädigungsgrad des Packstücks zugeordnet sein, wobei sich der wenigstens eine Beschädigungsgrad der Form der Kanten des Packstücks und/oder der Form der Ecken des Packstücks und/oder der Form von Nähten des Packstücks und/oder der Form der Oberfläche zwischen den Kanten, Ecken und/oder Nähten des Packstücks zugeordnet ist. Je weniger scharfkantig und gerade die Form der Kanten und Ecken ist, desto weniger stabil ist mutmaßlich des Packstück. Wenn die Form der Nähte entlang der Längsrichtung der Nähte erheblich variiert, kann dies darauf hinweisen, dass die Nähte bereichsweise beschädigt sind. Zwischen den Nähten, Ecken und Kanten kann die Oberfläche des Packstücks sehr gleichmäßig ausgebildet oder eher ungleichmäßig ausgebildet sein. Letzteres würde tendenziell für eine Schwächung des Packstücks und damit für einen schlechteren Stabilitätsparameter sprechen.

Der wenigstens eine Stabilitätsparameter kann auch der Form der Oberfläche zugeordnet sein, wobei ermittelte Abschabungen, Dellen, Knicke, Risse und/oder Schnitte an der Oberfläche des Packstücks zu ungünstigeren Stabilitätsparametern führen sollten. Es lässt sich aus der Beschaffenheit und den Mängeln eines Packstücks auf einen Wiederverwendungskennwert schließen. Dabei gilt der Grundsatz, dass die Stabilität, Tragfähigkeit und Stapelbarkeit einer Verpackung immer schlechter werden, je öfter die Verpackung wiederverwendet worden ist. Somit lässt sich ein Wiederverwendungskennwert einem Stabilitätsparameter zuordnen.

Zweckmäßig kann es auch sein, wenn die Auswerteeinheit wenigstens einen Stabilitätsparameter einer relativen Lage des Packstücks relativ zur Form des Packstücks zugordnet. Packstücke können nämlich in unterschiedlichen Ausrichtungen unterschiedlich stabil sein. Dies kann über den vorgenannten Stabilitätsparameter berücksichtig werden. Dieser Umstand kann sich zudem so zunutze gemacht werden, dass die Auswerteeinheit jedem Packstück basierend auf dem wenigstens einen Stabilitätsparameter einen richtungsabhängigen Stabilitätsscore zuordnet. Der Stabilitätsscore ist dann höher oder niedriger je nachdem in welcher Ausrichtung das entsprechende Packstück in die wenigstens eine Transporteinheit eingelegt wird. Beispielsweise kann das Packstück eine Längsrichtung und zwei davon unabhängig, mithin senkrecht zueinander verlaufende Querrichtungen aufweisen, wobei jeder dieser Richtungen ein separater Stabilitätsscore zugeordnet ist.

Ist beispielsweise der Stabilitätsscore in einer Querrichtung besonders hoch, kann das Packstück vorzugsweise so in die Transporteinheit verladen werden, dass diese Querrichtung wenigstens im Wesentlichen mit der Senkrechten zusammenfällt. Dies erlaubt dann auch eine Verladung auf einem niedriger liegenden Höhenniveau, als wenn das Packstück in einer anderen Ausrichtung in die Transporteinheit gestapelt würde. Mithin können bei richtungsabhängigen Stabilitätsscores von Packstücken unterschiedliche richtungsabhängige Verladeszenarien in Frage kommen. Welches Verladeszenarium jeweils zu berücksichtigen ist, kann dann anhand äußerer Umstände, wie dem Beladungszustand der Transporteinheit, der Art der Transporteinheit, des Stabilitätsscores der anderen Packstücke, den Größen der anderen Packstücke und/oder dem Gewicht der Packstücke, gewählt werden.

Mithin kann im Falle eines richtungsabhängigen Stabilitätsscores das Packstück in Abhängigkeit der jeweiligen richtungsabhängigen Stabilitätsscores in einer bestimmten Ausrichtung in der wenigstens einen Transporteinheit verladen werden. Dazu kann beispielsweise dem Roboter und/oder Person eine Information betreffend den richtungsabhängigen Stabilitätsscore und/oder eine Information betreffend Ausrichtung des Packstücks bei der Verladung in die Transporteinrichtung angezeigt und/oder mitgeteilt werden. Auch in diesem Falle des Anzeigens und/oder Mitteilens, kann das Anzeigen und/oder Mitteilen wie zuvor bereits beschrieben erfolgen. Zudem kann vorgesehen sein, dass der Roboter und/oder die Person entscheidet, nach welchem der richtungsabhängigen Stabilitätsscores eines Packstücks das Packstück wo und in welcher Ausrichtung in die Transporteinheit verladen wird.

Um den Packstücken möglichst zutreffend den wenigstens einen Stabilitätsparameter zuzuordnen, kann es sich anbieten, wenn die Auswerteeinheit wenigstens einen Stabilitätsparameter unter Verwendung einer automatisierten Mustererkennungseinheit mittels künstlicher Intelligenz ermittelt. Die Auswerteeinheit bedient sich dabei den Schlussfolgerungen aus einer Vielzahl von früheren und hinsichtlich des Stabilitätsparameters untersuchten Packstücken. Die Auswerteeinheit kann hier also wiederkehrende Muster mit wiederkehrenden Einflüssen auf den Stabilitätsscore berücksichtigen. Dies gilt insbesondere, wenn die in der Vergangenheit untersuchten Packstücke mit demselben oder einem ähnlichen Scanner gescannt worden sind, wie die Packstücke deren Stabilitätsparameter aktuelle anhand der vergangenen Untersuchungen abzuschätzen sind.

Die Auswerteeinheit kann sich also überwiegend auf Erfahrungswerte beziehen, ohne dass die Auswerteeinheit die Stabilitätsparameter tatsächlich aus bestimmten Messwerten berechnet, was aber dennoch durchaus der Fall sein kann, etwa bei der Bestimmung des Stabilitätsparameters betreffend die Abmessungen der Packstücke.

Dies trägt zudem dem Umstand Rechnung, dass der Stabilitätsscore in vielen Fällen nicht oder jedenfalls nicht mit einem vertretbaren Aufwand anhand bestimmter Parameter des Packstücks berechnet werden kann, schon gar nicht mit einer zufriedenstellenden Genauigkeit.

Es ist lediglich bekannt, einen Stapelstauchwiderstand aus Abmessungen der Packstücke und dem verwendeten Verpackungsmaterial zu berechnen. In den vorliegend relevanten Anwendungen liegen aber meist keine genauen Angaben zu den Verpackungsmaterialien einzelner Packstücke vor. Aber selbst wenn sich der Stapelstauchwiderstand nur abschätzen lässt, kann dieser ergänzend zur Bestimmung des Stabilitätsscores der Packstücke herangezogen werden, etwa in Form eines Ausgangswerts, der dann entsprechend des Stabilitätsscores mit Abschlägen und/oder Zuschlägen versehen wird, je nachdem ob die Stabilitätsparameter auf eine Verbesserung oder eine Verschlechterung der Stabilität, Stapelbarkeit und/oder Tragfähigkeit gegenüber dem Ausgangswert hindeuten.

Es bietet sich also an, wenn die automatisierte Mustererkennungseinheit mittels einer Vielzahl von Aufnahmen von Packstücken und diesen Packstücken jeweils zugeordneten Stabilitätsinformationen, Stabilitätsparametern und/oder Stabilitätsscores zur Ermittlung von Stabilitätsparametern basierend auf den dem Anlernen zugrunde gelegten Aufnahmen von Packstücken und diesen Packstücken jeweils zugeordneten Stabilitätsinformationen, Stabilitätsparametern und/oder Stabilitätsscores angelernt worden ist. Dabei handelt es sich dem Grundsatz nach um einen typischen empirischen Ansatz im Zusammenhang mit der Verwendung von künstlicher Intelligenz. Hierzu bedarf es daher für den Fachmann keiner weiteren detaillierteren Ausführungen.

Unabhängig von der Ermittlung der Stabilitätsparameter bietet es sich zur Bestimmung und Verwendung des Stabilitätsscores an, wenn dieser anhand des wenigstens einen Stabilitätsparameters mathematisch berechnet wird. In einem besonders bevorzugten Fall kann dies erfolgen, indem der wenigstens eine Stabilitätsparameter in jedem Fall einen Wert im Wertebereich zwischen 0 und 1 aufweist. Ein Wert von 1 kann dann bedeuten, dass die Stabilität, Tragfähigkeit und Stapelbarkeit des Packstücks durch den ermittelten Stabilitätsparameter, etwa im Vergleich zu einem packstückspezifischen Ausgangswert, nicht beeinträchtigt wird. Ein Wert von 0 würde dagegen bedeuten, dass infolge der ermittelten Stabilitätsparameter von keiner nennenswerten Stabilität, Tragfähigkeit und Stapelbarkeit auszugehen ist. Das Packstück kann dann die Klassifizierung "nicht stapelbar" erhalten, so dass dieses Packstück beispielsweise aussortiert und separat verladen werden kann.

Der Einfachheit halber können die Stabilitätsparameter zur Berechnung des Stabilitätsscores miteinander multipliziert werden. So erhält man bedarfsweise einen Stabilitätsscore in einem Wertebereich zwischen 0 und 1. Ein Stabilitätsscore von 1 zeigt dann keine verminderte Stapelbarkeit, etwa gegenüber einem bestimmten Ausgangswert, an, während ein Wert von 0 anzeigt, dass das Packstück nicht stapelbar ist. Die Multiplikation der Stabilitätsparameter hat den Vorteil, dass bereits ein einziger Stabilitätsparameter mit einem Wert von 0 unabhängig von den anderen Stabilitätsparametern zu einem Stabilitätsscore von 0 führt. Zudem ergibt sich für mehrere geringe Werte mehrerer Stabilitätsparameter ein sehr geringer Stabilitätsscore. Im Ergebnis kann der Stabilitätsscore für die Beladung der Packstücke in eine Transporteinheit in hohem Maße zweckmäßig genutzt werden.

Dies gilt umso mehr, wenn reale, zufällig beschädigte Packstücke und deren tatsächliche Stabilitätsparameter zum Anlernen der Mustererkennungseinheit verwendet werden. Die Stabilitätsscores stellen dann besonders praxisnahe Werte dar. Um für das Anlernen eindeutig definierte Packstücke verwenden zu können, bietet es sich an, wenn gezielt beschädigte Packstücke und deren tatsächliche Stabilitätsparameter zum Anlernen der Mustererkennungseinheit verwendet werden. Je nach Anwendungsfall können reale oder gezielt manipulierte Packstücke zum Anlernen der Mustererkennungseinheit verwendet werden. Die besten Ergebnisse des Anlernens werden aber oftmals erzielt, wenn das Anlernen unter Verwendung von realen Packstücken und von gezielt manipulierten Packstücken erfolgt. Grundsätzlich erforderlich wird es jedoch sein, die Werte der Stabilitätsparameter zu definieren und auch zu messen oder wenigstens abzuschätzen.

Nachfolgend wird die Erfindung anhand einer lediglich Ausführungsbeispiele darstellenden Zeichnung näher erläutert. In der Zeichnung zeigt

Fig. 1     eine Sortierstation zur Durchführung eines ersten Ausführungsbeispiels der Erfindung in einer schematischen Ansicht,

Fig. 2    ein erfindungsgemäßes Verfahren zum Beladen von Transporteinheiten mit Packstücken in einer schematischen Darstellung und

Fig. 3    ein alternatives, erfindungsgemäßes Verfahren zum Beladen von Transporteinheiten mit Packstücken in einer schematischen Darstellung.

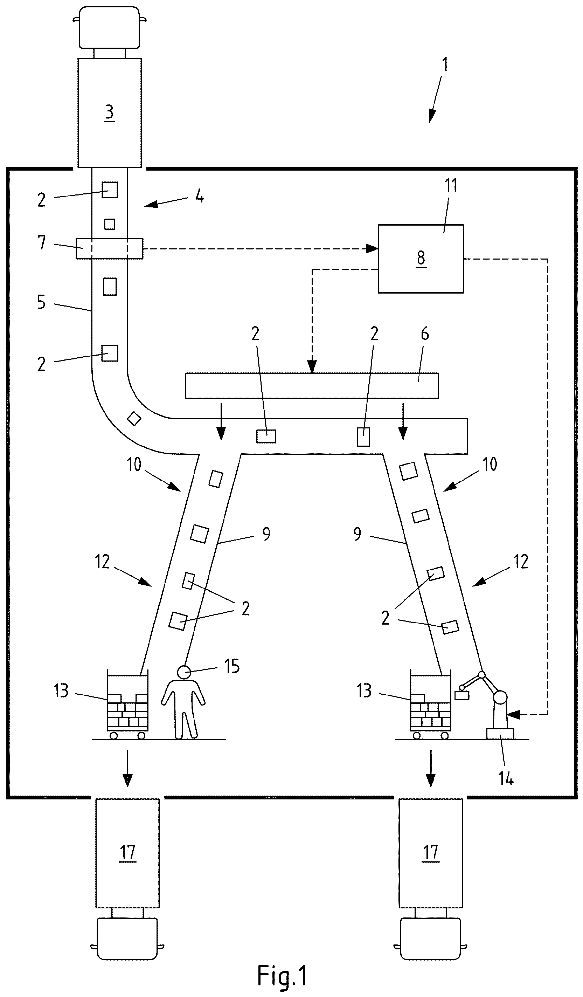

In der Fig. 1 ist eine Sortierstation 1 zum Umverteilen von Packstücken 2 dargestellt. Bei den Packstücken 2 kann es sich um Stückgüter, Pakete, Umschläge, Tüten und/oder Säcke handeln. Die Packstücke 2 werden mit Transporteinheiten 3 in Form von Nutzfahrzeugen, insbesondere Lastkraftwagen, Anhängern und/oder Sattelaufliegern an die Sortierstation 1 herangefahren, wobei sich die Packstücke 2 in den Aufbauten der Nutzfahrzeuge befinden. An der Sortierstation 1 angekommen werden die Packstücke 2 entladen und dabei vereinzelt. Beim dargestellten und insoweit bevorzugten Verfahren wird aus den entladenen Packstücken 2 eine einzige Transportreihenfolge 4 von Packstücken 2 erzeugt. Die Transportreihenfolge 4 wird, insbesondere wenigstens im Wesentlichen stetig, mit wenigstens einem Förderband 5 durch die Sortierstation 1 bis zu einer Sortiereinrichtung 6 transportiert. Bedarfsweise können auch mehrere Transportreihenfolgen 4 erzeugt werden, die dann parallel in der Sortierstation 1 gehandhabt werden können.

Die Transportreihenfolge 4 der Packstücke 2 wird einem optischen Scanner 7 zugeführt, in dem von jedem Packstück 2 ein Sortierparameter, insbesondere eine Postleitzahl erfasst wird. Zudem kann das Gewicht der Packstücke 2 erfasst werden. Bei dem dargestellten und insoweit bevorzugten Verfahren werden die Packstücke 2 durch einen Sechsseiten-Scanner 7 transportiert, wobei die Packstücke 2 jeweils von allen sechs Seiten gescannt werden. Es wird dabei eine Zielinformation wie eine Postleitzahl ausgelesen, die für das anschließende Sortieren der Packstücke 2 als Sortierparameter relevant ist. Die Reihenfolge der Packstücke 2 und die den Packstücken 2 zugeordneten Sortierparameter werden an eine Steuereinrichtung 8 übermittelt. Die Packstücke 2 werden vom Scanner 7 zur Sortiereinrichtung 6 transportiert, wo die Packstücke 2 entsprechend des Sortierparameters sortiert werden. Die sortierten Packstücke 2 werden von Rutschen 9, Förderbändern oder anderen Aufnahmen von einer Person oder einem Roboter 14 in die dafür vorgesehenen Transporteinheiten 13 gestapelt.

Hinsichtlich der Packstücke 2 bietet sich das beschriebene Verfahren an, wenn die Packstücke 2 umverpackte Stückgüter, insbesondere jeweils mit einem Karton umverpackte Stückgüter sind. Besonders zweckmäßig ist es dabei, wenn die Stückgüter Pakete, Tüten, Umschläge, Beutel und/oder Taschen sind. Diese Packstücke 2 sind in Sortierstationen in großer Zahl und bei kurzer Verweilzeit zu sortieren und zu verteilen.

Die vom Scanner 7 erzeugten Aufnahmen werden ferner einer Auswerteeinheit 11 zugeführt, die bei der dargestellten und insoweit bevorzugten Sortierstation in die Steuereinrichtung 8 ist, aber nicht sein muss. Die Auswerteeinheit 11 ermittelt anhand der Aufnahmen des Scanners 7 für jedes Packstück 2 eine Mehrzahl von Stabilitätsparametern ermittelt. Diese Stabilitätsparameter können Werte zwischen 0 und 1 annehmen. Ein Wert von 1 wird vergeben, wenn die Auswertung der Aufnahmen des Scanners 7 eine maximale Stabilität in Bezug auf die Art des jeweiligen Stabilitätsparameters ergibt. Ein Wert von 0 wird vergeben, wenn hinsichtlich der entsprechenden Art des Stabilitätsparameters von einer minimalen Stabilität auszugehen ist. Mit anderen Worten, je geringer der Stabilitätsparameter ist, desto größere Abstriche sind diesbezüglich von der Stabilität, Stapelbarkeit und/oder Tragfähigkeit des Packstücks 2 zu machen. Ein Wert eines Stabilitätsparameters von Null kann bedeuten, dass das zugehörige Packstück 2 nicht stapelbar ist und demnach aussortiert werden muss, was vorliegend nicht dargestellt ist, aber auf unterschiedliche Weise erfolgen kann.

Als Ausgangswert, von dem dann entsprechende Abstriche der Stabilität, Stapelbarkeit und/oder Tragfähigkeit des Packstücks 2 gemacht werden können, kann dabei ein Wert betreffend die Stabilität, Stapelbarkeit und/oder Tragfähigkeit des Packstücks 2 herangezogen werden, der sich wenigstens im Wesentlichen aus den Abmessungen und/oder dem verwendeten Verpackungsmaterial ergibt. Andere Ausgangswerte sind aber ebenfalls denkbar. Aus den geometrischen Abmessungen eines Packstücks 2 und einer spezifischen Stabilität des verwendeten Verpackungsmaterials, insbesondere des Kantenstauchwiderstands, lässt sich beispielsweise eine spezifische Tragfähigkeit, insbesondere der Stapelstauchwiderstand, des Packstücks 2 errechnen, welche als Ausgangswert herangezogen werden kann. Beispielsweise kann der Wert der spezifischen Stabilität in der Größenordnung zwischen 18 kN/m und 55 kN/m liegen. Je nach den Stabilitätsparametern des entsprechenden Packstücks 2 sind dann jedoch Abstriche von diesem Ausgangswert zu berücksichtigen.

Eine Tragfähigkeit in Form eines Stapelstauchwiderstands kann beispielsweise wie folgt berechnet werden:

$$BCT = 5{,}876 * ECT * \sqrt{PU * VMD}$$

BCT = Stapelstauchwiderstand [kN]
ECT = Kantenstauchwiderstand [kN/m]
PU = Packstückumfang [mm]
VMD = Verpackungsmaterialdicke [mm]

Je höher der Stapelstauchwiderstand ist, desto größer ist die Stabilität, Tragfähigkeit und/oder Stapelbarkeit des Packstücks 2. Der Packstückumfang kann von der Auswerteeinheit 11 durch die Aufnahmen des Scanners 7 ermittelt werden. Die Verpackungsmaterialdicke lässt sich anhand der Aufnahmen des Scanners 7 von den Packstücken 2 abschätzen.

Der so ermittelte Stapelstauchwiderstand kann nun als Ausgangswert herangezogen und mit den von der Auswerteeinheit ermittelten Stabilitätsparametern multipliziert werden, um mögliche Abschläge hinsichtlich der Stabilität, Stapelbarkeit und/oder Tragfähigkeit zu berücksichtigen. Diese können sich beispielsweise aus Beschädigungen der Packstücke 2, insbesondere der Verpackung ergeben. So können bestimmte Flächen des Packstücks 2 eingedrückt oder abgeschabt sein. Es können auch beispielsweise Kanten oder Ecken des Packstücks 2 geknickt oder anderweitig beschädigt sein. Möglich ist auch, dass die Verpackung des Packstücks 2 nicht richtig zugeklebt oder schon vorher mehrfach verwendet worden ist. All dies können Parameter sein, die zu einem verringerten Stapelstauchwiderstand beitragen. Zu möglichen Stabilitätsparametern wird zur Vermeidung von unnötigen Wiederholungen auch auf die in der allgemeinen Beschreibung bereits erläuterten Stabilitätsparameter verwiesen. Der theoretische, wie zuvor angegeben berechnete und mit den für die Stabilitätsparameter ermittelten Werten multiplizierte Stapelstauchwiderstand bildet dann bedarfsweise den Stabilitätsscore:

$$SC = BCT * SP1 * SP2 * ... * SPN$$

SC = Stabilitätsscore
BCT = Stapelstauchwiderstand
SP1 = Stabilitätsparameter 1
SP2 = Stabilitätsparameter 2
 ...
SPN = Stabilitätsparameter N
N = Anzahl der unterschiedlichen Stabilitätsparameter

In einem einfacheren Fall kann der Stabilitätsscore auch lediglich durch Multiplikation der einzelnen von der Auswerteeinheit ermittelten Stabilitätsparameter bestimmt werden.

$$SC = SP1 * SP2 * ... * SPN$$

N = Anzahl der unterschiedlichen Stabilitätsparameter

Der Stabilitätsscore ist dann bedarfsweise dimensionslos und kann weiter bedarfsweise einen Wert zwischen 0 und 1 annehmen.

Unabhängig davon, wie der Stabilitätsscore ermittelt wird, erfolgt das Einstapeln der Packstücke 2 in die Transporteinheiten 13 in Abhängigkeit der Stabilitätsscores der Packstücke 2, etwa so, dass Packstücke mit ähnlichen Stabilitätsscores gruppiert werden. Auf diese Weise wird eine Beladereihenfolge 12 der Packstücke 2 erzeugt. Mit anderen Worten, die Stabilitätsscores benachbarter Packstücke 2 ist mithin ähnlich, während die Stabilitätsscores von Packstücken 2, zwischen Packstücken 2, zwischen denen viele andere Packstücke 2 angeordnet sind, deutlich voneinander abweichen können. Dabei werden die Packstücke 2 grundsätzlich von einem hohen Wert des Stabilitätsscores in Richtung eines niedrigeren Werts des Stabilitätsscores gruppiert, also in Richtung abnehmender Stabilitätsscores. Die Bestimmung des Stabilitätsscores erfolgt bevorzugt in der Auswerteeinheit 11 oder der Steuereinrichtung 8.

Dabei müssen die Packstücke 2 in der Beladereihenfolge 12 der Einfachheit halber nicht exakt in der durch die Stabilitätsscores vorgegebenen Reihenfolge angeordnet sein. Ansonsten kann der Aufwand für das Umgruppieren zu groß werden. Zudem ist es meist unproblematisch, wenn beispielsweise zwischen zwei Packstücken 2 ein Packstück 2 mit einem höheren oder einem niedrigeren Stabilitätsscore als die anderen beiden Packstücke 2 vorgesehen ist. Es wird trotzdem der Vorteil erreicht, dass in der Beladereihenfolge 12 zunächst die Packstücke 2 mit hoher Stabilität, Stapelbarkeit und/oder Tragfähigkeit in eine Transporteinheit 13 eingelegt werden und erst danach Packstücke 2 mit tendenziell immer geringeren Stabilitätsscores in die Transporteinheit 13 eingeladen werden.

Die besonders stabilen Packstücke 2 sind dann unten in der Transporteinheit 13 angeordnet, werden aber durch die darüber gestapelten Packstücke 2 nicht beschädigt. Weniger stabile Packstücke 2 sind weiter oben in der Transporteinheit 13 angeordnet, und zwar so hoch, dass auch diese nicht durch darüber angeordnete Packstücke 2 beschädigt werden. Die am wenigsten stabilen Packstücke 2 werden dann ganz oben in die Transporteinheit 13 eingelegt.

Eine Beladereihenfolge 12, die nicht streng nach den Stabilitätsscores ausgerichtet ist, lässt zudem parallel die Berücksichtigung der Größe der Packstücke 2 und/oder der Gewichte der Packstücke 2 zu. Die Beladereihenfolge 12 schont dann gegebenenfalls nicht nur die Packstücke 2 in der Transporteinheit 13, sondern sorgt auch dafür, dass die Transporteinheit 13 platzsparend beladen wird.

Das Einlegen der Packstücke 2 in die Transporteinheiten 13 kann durch einen Roboter 14 und/oder durch eine Person 15 erfolgen, und zwar bedarfsweise in der Beladereihenfolge. Denkbar ist aber auch, dass der Roboter 14 und/oder die Person 15 auswählen kann, welches Packstück 2 als nächstes verladen wird. Dies wird dann typischerweise ein Packstück 2 sein, das sich platzsparend verladen lässt und das einen für das entsprechende Höhenniveau angemessenen Stabilitätsscore aufweist. Welcher Stabilitätsscore dem jeweiligen Packstück 2 zugeordnet ist, kann dem Roboter 14 und/oder der Person 15 angezeigt oder mitgeteilt werden. Dann kann auf ein Umgruppieren der Packstücke 2 aus der Sortierreihenfolge 10 in eine Beladereihenfolge 12 ganz oder teilweise verzichtet werden.

Es kann auch insoweit auf ein Umgruppieren der Packstücke 2 aus der Sortierreihenfolge 10 in eine Beladereihenfolge 12 verzichtet werden, wenn die Sortiereinrichtung 6 die Packstücke 2 nicht bloß nach dem wenigstens einen Sortierparameter sortiert. Dann können die Packstücke 2 einerseits nach dem Sortierparameter und andererseits nach den Abmessungen und/oder den Stabilitätsscores der Packstücke 2 sortiert werden. Die Sortiereinrichtung 6 erzeugt mithin Packstücke 2 in Sortierreihenfolgen 10, welche gleichfalls Beladereihenfolgen 12 darstellen. Die Packstücke 2 können mithin der Reihe nach in die Transporteinheiten 13 verladen werden, wobei dann durch die vorherige Sortierung sichergestellt wird, dass die Packstücke 2 platzsparend verladen werden können und einander nicht gegenseitig beschädigen.

Bei der dargestellten und insoweit bevorzugten Sortierstation 1 werden die beladenen Transporteinheiten 13 in Nutzfahrzeuge 17, insbesondere Lastkraftwagen oder Anhänger verladen und abtransportiert. Erforderlich ist dies nicht. Die Transporteinheiten 13 könnten nach dem Beladen auch anderweitig gehandhabt werden.

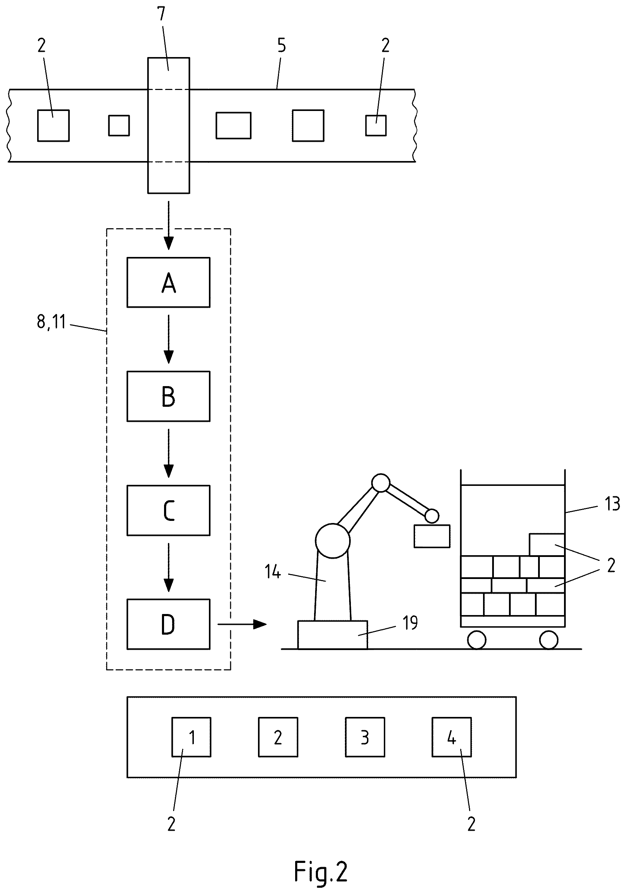

In der Fig. 2 ist ein mögliches Verfahren zum Beladen von Transporteinheiten 13 mit Packstücken 2 schematisch dargestellt. In einem ersten Verfahrensschritt werden die Packstücke 2 auf einem Förderband 5 an einem Scanner 7 vorbeigeführt, bei dem es sich beispielsweise um einen Sechsseiten-Scanner handeln kann. Andere Scanner-Typen sind aber ebenfalls denkbar. Die vom Scanner 7 erzeugten Aufnahmen werden an eine Auswerteeinheit 11 weitergegeben, die in eine Steuereinrichtung 8 einer Sortierstation 1 integriert sein kann, aber nicht sein muss. Die Auswerteeinheit 11 ermittelt in einem ersten Verarbeitungsschritt A anhand der Aufnahmen des Scanners 7 für jedes Packstück 2 eine Mehrzahl von Stabilitätsparametern anhand derer die Auswerteeinheit 11 für jedes Packstück 2 einen Stabilitätsscore bestimmt. Zudem werden von der Auswerteeinheit 11 anhand der vom Scanner 7 übermittelten Daten die Abmessungen der Packstücke 2 ermittelt.

Sodann wird in einem Folgeschritt B anhand der Abmessungen und der Stabilitätsscores der Packstücke 2 von der Auswerteeinheit 11 oder der Steuereinrichtung 8 eine Anordnung der Packstücke 2 in einer Transporteinheit 13 nach dem Verladen berechnet. Diese Anordnung wird dabei rechnerisch dahingehend optimiert, dass der in der Transporteinheit 13 zur Verfügung stehende Raum möglichst gut, mithin platzsparend, durch die Packstücke 2 genutzt wird. Mit anderen Worten, es soll eine möglichst dichte Packung der Packstücke 2 in der Transporteinheit 13 ohne unnötig große Hohlräume ermittelt werden. Gleichzeitig sollen bei der Berechnung der Anordnung der Packstücke 2 in der Transporteinheit 13 die Stabilitätsscores der Packstücke 2 berücksichtigt werden, so dass es nicht zu Beschädigungen der Packstücke 2 in der Transporteinheit 13 kommt, und zwar durch die anderen Packstücke 2 in der berechneten Anordnung. Insbesondere aufgrund der letztgenannten Anforderung, müssen gegebenenfalls Abstriche bei der Ausnutzung des Laderaums der Transporteinheiten 13 gemacht werden. Wenn versucht würde, eine möglichst platzsparende Beladung der Transporteinheiten 13 zu erreichen, wäre es möglicherweise erforderlich Packstücke 2 mit geringen Stabilitätsscores weit unten in der Transporteinheit 13 zu verladen, wo die entsprechenden Packstück 2 von darüber gestapelten Packstücken 2 mit hoher Wahrscheinlichkeit beschädigt, insbesondere eingedrückt, würden.

Wenn eine Anordnung von Packstücken 2 ermittelt worden ist, bei der einerseits der für das Beladen zur Verfügung stehende Raum in der Transporteinheit 13 gut genutzt und andererseits eine Beschädigung der Packstücke 2 mit hoher Wahrscheinlichkeit vermieden wird, errechnet die Auswerteeinheit 11 oder die Steuereinrichtung 8 in einem dritten Verarbeitungsschritt C eine Beladereihenfolge aus Packstücken 2, in welcher die Packstücke 2 in die Transporteinheit 13 zu stapeln sind, um die berechnete Anordnung von Packstücke 2 in der Transporteinheit 13 zu erzeugen. Diese Beladereihenfolge wird in einem vierten Verarbeitungsschritt D zusammen mit der zuvor errechneten, optimierten Anordnung der Packstücke 2 einem Roboter 14 mitgeteilt, der die Packstücke 2 in der Beladereihenfolge ergreift und in der entsprechenden Anordnung in der Transporteinheit 13 stapelt.

Dies ist in der Fig. 2 durch die Nummerierung der Packstücke 2 veranschaulicht. Eine körperliche Nummerierung oder andere separate Kennzeichnung der Packstücke 2 ist jedoch nicht erforderlich. Der Roboter 14 muss lediglich in der Lage sein, die Packstücke 2 zu unterscheiden und der Beladereihenfolge zuzuordnen. Der Roboter 14 kann dazu Parameter der Packstücke 2 aktive erkennen. Alternativ oder zusätzlich kann dem Roboter 14 auch nur mitgeteilt werden, an welcher Position sich welches Packstück 2, insbesondere in welcher Ausrichtung, befindet. Der Roboter 14 wird durch eine eigene Steuerung 19 so gesteuert, dass er die Packstücke 2 in der gewünschten Reihenfolge und Anordnung in die Transporteinheit 13 verlädt.

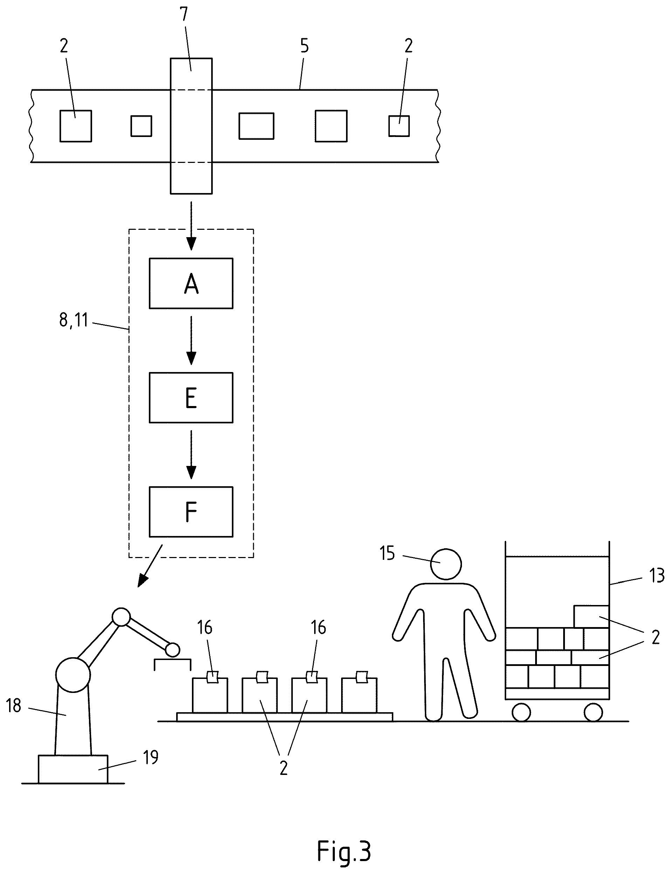

In der Fig. 3 ist ein alternatives Verfahren zum Beladen von Transporteinheiten 13 mit Packstücken 2 schematisch dargestellt. Die ersten beiden Verfahrensschritte, nämlich das Scannen der Packstücke 2 und das Ermitteln der Abmessungen und der Stabilitätsscores der Packstücke 2 erfolgt wie bei dem in Fig. 2 dargestellten Verfahren. Es wird jedoch keine optimierte Anordnung der Packstücke 2 in der Transporteinheit 13 errechnet. Stattdessen werden die Packstücke 2 mit Labeln 16 versehen, welche bestimmte Wertebereiche des Stabilitätsscores repräsentieren und in einem nachfolgenden Verarbeitungsschritt E erzeugt werden. Diese Wertebereiche können beispielsweise mit den Stabilitätseigenschaften "nicht stapelbar", "geringe Stabilität", "normale Stabilität" und "sehr stabil" assoziiert sein. Die Label 16 können in einem einfachen Fall unterschiedliche Farben aufweisen, wobei die Farben im Sinne eines Farbcodes den unterschiedlichen Wertebereiˋ-

chen bzw. Stabilitätseigenschaften zugeordnet sind. Die Packstücke 2 werden dann von einer Person 15 händisch in die Transporteinheit 13 verladen, wobei die Person 15 den Beladezustand der Transporteinheit 13, die Größe der Packstücke 2 und deren Stabilitätsscores anhand der Labels 16 berücksichtigt.

Bei dem dargestellten und insoweit bevorzugten Verfahren werden von einem Roboter 18 die Packstücke 2 zum Verladen in die Transporteinheit 13 an die Person 15 weitergegeben, wobei der Roboter 18 zuvor die Labels 16 auf die Packstücke 2 aufbringt. Dabei kann vorgesehen sein, dass der Roboter 18 anhand der Abmessungen und der Stabilitätsscores der Packstücke 2 eine Vorsortierung der Packstücke 2 durchführt, so dass der Person 15 immer eine geeignete Auswahl für das Einladen der nächsten Packstücke 2 zur Verfügung steht. Erforderlich ist dies jedoch nicht. Die geeignete Steuerungsroutine des Roboters wird in einem dem Verladen vorgelagerten Verarbeitungsschritt F erstellt.

Anstelle eines Labels 16 kann der die Packstücke 2 verladenden Person 15 über einen Laser oder eine andere Lichtquelle eine Information betreffend den Stabilitätscore auf die zum Verladen und zur Auswahl durch die Person 15 bereitgestellten Packstücke 2 projiziert werden. Diese Information kann beispielsweise der Stabilitätscore oder ein Wertebereich des Stabilitätscores sein. Denkbar ist alternativ auch, dass die betreffende Person 15 Kopfhörer trägt und die Informationen betreffend den Stabilitätscore der Packstücke 2 der Person 15 als Audiosignal übermittelt wird. Die Person 15 kann aber auch eine sogenannte Virtual-Reality-Brille tragen, so dass der Person 15 die Informationen betreffend den Stabilitätscore optisch im Sinne einer virtuellen Realität angezeigt wird. Beispielsweise können die Packstücke 2 von der Virtual-Reality-Brille in Abhängigkeit des jeweiligen Stabilitätscores der Packstücke 2 farblich gekennzeichnet werden.

Bezugszeichenliste

| | |
|---|---|
| 1 | Sortierstation |
| 2 | Packstück |
| 3 | Transporteinheit |
| 4 | Transportreihenfolge |
| 5 | Förderband |
| 6 | Sortiereinrichtung |
| 7 | Scanner |
| 8 | Steuereinrichtung |
| 9 | Förderband |
| 10 | Sortierreihenfolge |
| 11 | Auswerteeinheit |
| 12 | Beladereihenfolge |
| 13 | Transporteinheit |
| 14 | Roboter |
| 15 | Person |
| 16 | Label |
| 17 | Nutzfahrzeug |
| 18 | Roboter |
| 19 | Steuereung |

**Patentansprüche**

1. Verfahren zum Beladen wenigstens einer Transporteinheit (13) mit Packstücken (2),

    - bei dem die Packstücke (2) nacheinander mit einem optischen Scanner (7) gescannt werden,
    - bei dem von einer Auswerteeinheit (11) anhand der Aufnahmen des optischen Scanners (7) von jedem Packstück (2) wenigstens ein Stabilitätsparameter ermittelt wird,
    - bei dem die Auswerteeinheit (11) jedem Packstück (2) basierend auf dem wenigstens einen Stabilitätsparameter einen Stabilitätsscore zuordnet und
    - bei dem die Packstücke (2) in Abhängigkeit der jeweiligen Stabilitätsscores an unterschiedliche Stellen in der wenigstens einen Transporteinheit (13) verladen werden.

2. Verfahren nach Anspruch 1,

    - bei dem die Packstücke (2) in Abhängigkeit der jeweiligen Stabilitätsscores auf unterschiedlichen Höhenniveaus (19,20,21) in der wenigstens einen Transporteinheit (13) verladen werden und
    - bei dem, vorzugsweise, die Packstücke (2) in Abhängigkeit der jeweiligen Stabilitätsscores wenigstens auf den unterschiedlichen Höhenniveaus (19,20,21) hoch, mittel und tief in der wenigstens einen Transporteinheit (13) verladen werden.

3. Verfahren nach Anspruch 1 oder 2,

    - bei dem die wenigstens eine Transporteinheit (13) ein Rollbehälter, eine Gitterbox, eine Palette, eine Palette mit Wänden, eine sogenannte Wechselbrücke, LKW oder eine Unit Load Device (ULD) ist und/oder
    - bei dem die Packstücke (2) von einem Sechsseiten-Scanner (7) und/oder einem Linienscanner, insbesondere einem RGB-Linienscanner, und/oder einem Volumenscanner gescannt werden.

4. Verfahren nach einem der Ansprüche 1 bis 3,

    - bei dem die Packstücke (2) von wenigstens einem Roboter (14) und/oder von wenigstens einer Person (15) in Abhängigkeit der jeweiligen Stabilitätsscores an unterschiedliche Stellen in der wenigstens einen Transporteinheit (13) verladen werden und

- bei dem, vorzugsweise, dem Roboter (14) und/oder der Person (15) eine Information betreffend den Stabilitätsscore und/oder eine Information betreffend den anhand des Stabilitätsscores bestimmten Ort der Verladung angezeigt und/oder mitgeteilt wird.

5. Verfahren nach einem der Ansprüche 1 bis 4,

- bei dem die Packstücke (2) nacheinander in einer Transportreihenfolge (4) mit dem optischen Scanner (7) gescannt werden,
- bei dem die Packstücke (2) in Abhängigkeit der den Packstücken (2) zugeordneten Stabilitätsscores in eine von der Transportreihenfolge (4) abweichende Beladereihenfolge (12) gebracht und in der Beladereihenfolge (12) in die Transporteinheit (13) verladen werden und
- bei dem, vorzugsweise, die Packstücke (2) in der Beladereihenfolge (12) zu dem die Packstücke (2) in die Transporteinheit (13) verladenden Roboter (14) und/oder zu der die Packstücke (2) in die Transporteinheit (13) verladenden Person (15) transportiert werden.

6. Verfahren nach Anspruch 5,

- bei dem die Packstücke (2) von einer Sortiereinrichtung (6) automatisiert in Abhängigkeit der den Packstücken (2) zugeordneten Stabilitätsscores in eine von der Transportreihenfolge (4) abweichende Beladereihenfolge (12) gebracht werden und/oder
- bei dem Packstücke (2) anhand des zugeordneten Stabilitätsscores als nichtstapelbar aus der Transportreihenfolge (4) und/oder der Beladungsreihenfolge (12) ausgeschleust werden und/oder
- bei dem die Packstücke (2) von einer Transporteinrichtung (9) automatisiert in der Beladereihenfolge (12) zu dem die Packstücke (2) in die Transporteinheit (13) verladenden Roboter (14) und/oder zu der die Packstücke (2) in die Transporteinheit (13) verladende Person (15) transportiert werden.

7. Verfahren nach einem der Ansprüche 1 bis 6,

- bei dem von der Auswerteeinheit (11) wenigstens ein Stabilitätsparameter der Packstücke (2) in Form eines Größenparameters, insbesondere in Form einer Höhe, einer Breite und/oder einer Länge ermittelt wird und/oder
- bei dem von der Auswerteeinheit (11) wenigstens ein Stabilitätsparameter der Packstücke (2) betreffend die Form und/oder der Oberfläche ermittelt wird.

8. Verfahren nach Anspruch 7,

- bei dem der wenigstens eine Stabilitätsparameter einer ermittelten Packstückart und/oder einem ermittelten Verpackungsmaterial des Packstücks (2) und/oder einer Mehrlagigkeit des ermittelten Verpackungsmaterials und/oder einer Beschichtung des Verpackungsmaterials und/oder einer Feuchtigkeit des Verpackungsmaterials und/oder wenigstens einem Fleck des Verpackungsmaterials zugeordnet ist und/oder
- bei dem der Stabilitätsparameter einem Logo, einem Aufkleber, einer Absender-Adresse und/oder einem Retourenlabel zugeordnet ist.

9. Verfahren nach Anspruch 7 oder 8,

- bei dem der wenigstens eine Stabilitätsparameter der Art von auf dem Packstück (2) angebrachten Klebebändern und/oder der Anordnung von auf dem Packstück (2) angebrachten Klebebändern und/oder der Größe des Öffnungsbereichs des Packstücks (2) und/oder der Anordnung des Öffnungsbereichs des Packstücks (2) am Packstück (2) und/oder dem Öffnungsgrad des Öffnungsbereichs des Packstücks (2) zugeordnet ist.

10. Verfahren nach einem der Ansprüche 7 bis 9,

- bei dem der wenigstens eine Stabilitätsparameter wenigstens einem Beschädigungsgrad des Packstücks (2) zugeordnet ist und
- bei dem, vorzugsweise, der wenigstens eine Beschädigungsgrad der Form der Kanten des Packstücks (2) und/oder der Form der Ecken des Packstücks (2) und/oder der Form von Nähten des Packstücks (2) und/oder der Form der Oberfläche zwischen den Kanten, Ecken und/oder Nähten des Packstücks (2) zugeordnet ist.

11. Verfahren nach Anspruch 10,

- bei dem der wenigstens eine Stabilitätsparameter der Form der Oberfläche, Abschabungen, Dellen, Knicke, Risse und/oder Schnitte an der Oberfläche des Packstücks (2) zugeordnet ist und/oder
- bei dem der wenigstens eine Stabilitätsparameter einem Wiederverwendungskennwert des Packstücks (2) zugeordnet ist.

12. Verfahren nach einem der Ansprüche 7 bis 9,

- bei dem die Auswerteeinheit wenigstens einen Stabilitätsparameter einer relativen Lage des Packstücks (2) relativ zur Form des Packstücks (2) zugordnet und

- bei dem, vorzugsweise, die Auswerteeinheit jedem Packstück (2) basierend auf dem wenigstens einen Stabilitätsparameter einen richtungsabhängigen Stabilitätsscore zuordnet.

13. Verfahren nach Anspruch 12,

- bei dem die Packstücke (2) in Abhängigkeit der jeweiligen richtungsabhängigen Stabilitätsscores in einer bestimmten Ausrichtung in der wenigstens einen Transporteinheit (13) verladen werden und

- bei dem, vorzugsweise, dem Roboter (14) und/oder der Person (15) eine Information betreffend den richtungsabhängigen Stabilitätsscore und/oder eine Information betreffend die Ausrichtung des Packstücks (2) bei der Verladung in die Transporteinheit (13) angezeigt und/oder mitgeteilt wird.

14. Verfahren nach einem der Ansprüche 1 bis 13,

- bei dem die Auswerteeinheit (11) wenigstens einen Stabilitätsparameter unter Verwendung einer automatisierten Mustererkennungseinheit mittels künstlicher Intelligenz ermittelt und

- bei dem, vorzugsweise, die automatisierte Mustererkennungseinheit mittels einer Vielzahl von Aufnahmen von Packstücken (2) und diesen Packstücken (2)( jeweils zugeordneten Stabilitätsinformationen, Stabilitätsparametern und/oder Stabilitätsscores zur Ermittlung von Stabilitätsparametern basierend auf den dem Anlernen zugrunde gelegten Aufnahmen von Packstücken (2) und diesen Packstücken (2) jeweils zugeordneten Stabilitätsinformationen, Stabilitätsparametern und/oder Stabilitätsscores angelernt worden ist.

15. Verfahren nach einem der Ansprüche 1 bis 14,

- bei dem der Stabilitätsscore anhand des wenigstens einen Stabilitätsparameters berechnet wird,

- bei dem, vorzugsweise, der wenigstens eine Stabilitätsparameter einen Wert im Wertebereich zwischen 0 und 1 aufweist,

- bei dem, weiter vorzugsweise, die Stabilitätsparameter zur Berechnung des Stabilitätsscores miteinander multipliziert werden und

- bei dem, insbesondere weiter bevorzugt, der Stabilitätsscore einen Wert im Wertebereich zwischen 0 und 1 aufweist.

16. Verfahren nach Anspruch 14,

- bei dem reale, zufällig beschädigte Packstücke (2) und deren tatsächliche Stabilitätsparameter und/oder gezielt beschädigte Packstücke (2) und deren tatsächliche Stabilitätsparameter zum Anlernen der Mustererkennungseinheit verwendet werden.

Fig.1

Fig.2

Fig.3

# EP 4 742 120 A1

Europäisches Patentamt
European Patent Office
Office européen des brevets

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/274550 A1 (SCHULENBERG MARTIN [DE] ET AL) 31. August 2023 (2023-08-31) | 1-11, 14-16 | INV. G06Q10/04 |
| Y | * Absätze [0046], [0049], [0021], [0024], [0034], [0028]; Abbildungen 1-3 * | 12,13 | B07C5/00 B65G61/00 G06Q10/0633 G06Q10/083 |
| | ----- | | G06Q10/087 |
| Y | BISCHOFF ET AL: "Three-dimensional packing of items with limited load bearing strength", EUROPEAN JOURNAL OF OPERATIONAL RESEARCH ELSEVIER, AMSTERDAM, NL, Bd. 168, Nr. 3, 1. Februar 2006 (2006-02-01), Seiten 952-966, XP024933971, ISSN: 0377-2217, DOI: 10.1016/J.EJOR.2004.04.037 [gefunden am 2006-02-01] * Abbildungen 1,2 * | 12,13 | |
| | ----- | | |
| A | US 2024/109199 A1 (DIANKOV ROSEN NIKOLAEV [JP] ET AL) 4. April 2024 (2024-04-04) * Zusammenfassung; Abbildungen 1-8 * | 1-16 | |
| | ----- | | **RECHERCHIERTE SACHGEBIETE (IPC)** |
| A | US 2024/135305 A1 (CARON ERIC L [CA] ET AL) 25. April 2024 (2024-04-25) * Zusammenfassung; Abbildungen 1A-5 * | 1-16 | G06Q B07C B65G |
| | ----- | | |
| A | FR 3 141 546 A1 (ITINSELL X [FR]) 3. Mai 2024 (2024-05-03) * Absatz [0078] * | 1-16 | |
| | ----- | | |

Der vorliegende Recherchenbericht wurde für alle Patentansprüche erstellt

| Recherchenort | Abschlußdatum der Recherche | Prüfer |
|---|---|---|
| München | 20. März 2026 | Liendl, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 25 21 3684

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2026

| Im Recherchenbericht angeführtes Patentdokument | Datum der Veröffentlichung | Mitglied(er) der Patentfamilie | Datum der Veröffentlichung |
|---|---|---|---|
| US 2023274550 A1 | 31-08-2023 | AU 2023200617 A1 | 14-09-2023 |
| | | CA 3188674 A1 | 25-08-2023 |
| | | EP 4234456 A1 | 30-08-2023 |
| | | KR 20230127902 A | 01-09-2023 |
| | | US 2023274550 A1 | 31-08-2023 |
| US 2024109199 A1 | 04-04-2024 | CN 112009810 A | 01-12-2020 |
| | | DE 102019009189 A1 | 03-12-2020 |
| | | DE 102019130043 A1 | 03-12-2020 |
| | | JP 6729953 B1 | 29-07-2020 |
| | | JP 7723365 B2 | 14-08-2025 |
| | | JP 2020196117 A | 10-12-2020 |
| | | JP 2020196127 A | 10-12-2020 |
| | | KR 20200138076 A | 09-12-2020 |
| | | KR 20220080061 A | 14-06-2022 |
| | | US 10618172 B1 | 14-04-2020 |
| | | US 2020376670 A1 | 03-12-2020 |
| | | US 2021237274 A1 | 05-08-2021 |
| | | US 2024109199 A1 | 04-04-2024 |
| US 2024135305 A1 | 25-04-2024 | KEINE | |
| FR 3141546 A1 | 03-05-2024 | KEINE | |

Für nähere Einzelheiten zu diesem Anhang : siehe Amtsblatt des Europäischen Patentamts, Nr.12/82

EPO FORM P0461